# EUROPEAN PATENT APPLICATION

(11) **EP 4 697 140 A1**
(43) Date of publication of application: **18.02.2026**
(21) Application number: 24194105.3
(22) Date of filing: 12.08.2024
(51) Int. Cl.: G06F 3/00, G06F 3/01, G06F 3/03, G06F 3/0488

(54) **METHOD AND SYSTEM FOR DUAL-MODE TOUCH AND TOUCHLESS GESTURE CONTROL OF A COMPUTER DEVICE**

(71) Applicant: AMERIA AG, 69124 Heidelberg (DE)
(72) Inventor: METTER, Albrecht, 69120 Heidelberg (DE)
(74) Representative: Best, Bastian

(57) **Abstract**

According to a first aspect of the present invention, it may be provided a method for controlling a computer device. The computer device may comprise a touchless gesture input system. The computer device may comprise a touch-sensitive control surface. The method may comprise in a touch input mode, generating at least one control command configured to manipulate content displayed on a display associated with the computer device based on touch input on the touch-sensitive control surface. It may be provided determining presence of a gesture mode activation trigger. The gesture mode activation trigger may include a touch input on the touch-sensitive control surface comprising two or more touchpoints. The method may further comprise switching from the touch mode to a touchless gesture input mode in response to the determining. In the touchless gesture input mode, the method may comprise generating at least one control command configured to manipulate content displayed on the display based on a free-space finger movement determined by the touchless gesture input system.

## Description

### TECHNICAL FIELD

The present disclosure relates to interactive computer systems and methods for user input. Specifically, the present disclosure pertains to a system and method for seamlessly transitioning between touch input and touchless gesture control and vice versa to manipulate content on a display, enhancing user interaction with electronic devices through a combination of touch-sensitive surfaces and touchless gesture recognition technology.

### BACKGROUND

In the field of human-computer interaction, the evolution of input methods has been a critical factor in enhancing user experience and productivity. Traditional input devices such as keyboards and mice have been the standard for interfacing with computer systems for a long time. With the development of touch-sensitive technologies, touchscreens and trackpads have become prevalent, allowing users to interact with their devices in a more intuitive and direct manner. Known systems typically involve either touch-based controls, where a user physically contacts a touch-sensitive surface, or touchless controls, where gestures performed in the air are detected by sensors.

Despite the substantial advances in the field of human-computer interaction, there remains a need for systems that can seamlessly integrate touch and touchless controls. Users often encounter situations where touch input is not ideal, such as when their hands are dirty or when they are wearing gloves, making the touch-sensitive surface less responsive or entirely unusable. Conversely, touchless gesture systems can be less precise and may require a learning curve for users to perform gestures accurately. Moreover, the constant activation of touchless sensors can lead to increased power consumption, which is particularly concerning for portable devices like laptops and tablets.

Current approaches to integrating touch and touchless inputs often result in a compromise between the two modalities. Some systems may require users to manually switch between touch and touchless modes, which can interrupt workflow and decrease efficiency. Others may offer simultaneous activation of both modes, leading to accidental inputs, confusion as the system struggles to interpret user intentions, and increased power consumption. Additionally, the lack of customization in the sensitivity and responsiveness of the mode-switching triggers can frustrate users who have specific preferences or who operate in varying environments.

Therefore, there is a need to provide an improved method for controlling a computer device while addressing the user experience, accuracy, and power consumption challenges associated with existing systems.

It is thus an objective of this invention to provide a versatile user interface that overcomes one or more of the disadvantages of known systems.

### SUMMARY OF THE INVENTION

The problem is solved by the subject-matter defined in the independent claims. Advantageous modifications of embodiments of the invention are defined in the dependent claims as well as in the description and the figures.

According to a first aspect of the present invention, a method for controlling a computer device may be provided. The method may be computer-implemented. The computer device may a touchless gesture input system. The computer device may comprise a touch-sensitive control surface. The method may comprise a touch input mode, generating at least one control command configured to manipulate content displayed on a display means associated with the computer device based on touch input on the touch-sensitive control surface. The method may comprise determining presence of a gesture mode activation trigger. The gesture mode activation trigger may include a touch input on the touch-sensitive control surface comprising two or more touchpoints. The method may further comprise switching from the touch mode to a touchless gesture input mode in response to the determining of the presence of a gesture mode activation trigger. In the touchless gesture input mode, the method may comprise generating at least one control command configured to manipulate content displayed on the display means based on a free-space finger movement determined by the touchless gesture input system.

In other words, the first aspect of the present invention may be a computer-implemented method for controlling a computer device, wherein the computer device comprises and/or is communicatively coupled to display means, a touch-sensitive control surface, and a touchless gesture input system comprising sensor means, the sensor means being configured for observing an interaction space arranged at least partially above the touch-sensitive control surface. The method may comprise generating, based on a user's touch input received by the touch-sensitive control surface, at least one touch control command for manipulating content displayed on the display means, while the computer device is in a touch input mode. The method may comprise switching from the touch input mode to a touchless gesture input mode in response to detecting a gesture mode activation trigger. The gesture mode activation trigger may include the user touching the touch-sensitive control surface by at least two, preferably three, fingers. The gesture mode activation trigger may preferably be detected upon determining by the touch-sensitive control surface that the user touches the touch-sensitive control surface by at least two, preferably three, fingers. The method may comprise, in the touchless gesture input mode, determining, based at least partially on sensor data captured using the sensor means, a movement of one finger and/or fingertip of the user, while the one finger and/or fingertip is arranged at least partially in the interaction space. The method may comprise, in the touchless gesture input mode, generating at least one gesture control command configured for manipulating content displayed on the display means in accordance with the movement of the at least one finger and/or fingertip.

By the present invention, the user is provided with a convenient option for seamless and fluid transition between touch-based interaction and touchless gesture control and vice versa without requiring complicated user actions. Rather, simply resting two or more fingers Thereby, a more natural interaction flow is provided which advantageously enhances the user experience.

Throughout the present disclosure, the term "touchless" should be understood in relation to the electronic device or computer device. This means that a touchless interaction or a touchless user input does not necessarily mean that the user does not touch any objects or components of the electronic device or computer device in general, but that for the specific desired user interaction or user input, no touching of an input device intended for this purpose is required. Touchless interaction may be understood as gesture-based interaction wherein the gestures are performed in an interaction space.

Manipulating content may in particular comprise causing a pointer movement of a pointer displayed on the display means. The pointer may, e.g., be a mouse pointer.

Throughout the present disclosure, the term "computer device" may refer to any electronic device capable of processing data and executing instructions. Computer devices may come in many forms, including desktop computers, laptops, tablets, and smartphones. Also, other types of devices such as television sets, in particular so-called smart TVs, set-top-boxes and gaming devices, also referred to as gaming consoles, are examples of computer devices. Furthermore, any type of other physical apparatus with at least some computing functionality may be referred to as a computer device, such as without limitation a computer device which is built into another higher-level electronic device such as a Virtual Reality device, a car, a vehicle and/or the like. Generally speaking, a computer device typically includes at least one central processing unit (CPU), at least one memory component, one or more input/output devices, and possibly various other components.

Said at least one central processing unit (CPU), at least one memory component and one or more input/output devices may function as follows: The CPU may be the central processing unit of the computer device and may be responsible for performing all the instructions and calculations that the device needs to execute. It may be essentially the "brain" of the computer device, and it may interpret and execute commands/instructions provided to it by a user or a device's software. The memory component of a computer device may be responsible for storing data and instructions that are required for the device's operation. This memory may be divided into two categories: temporary and permanent. Temporary memory may be used to store data that is needed only for a short period, while permanent memory may be used for long-term storage. Input/output devices may be used to interact with the computer device. Common input devices include mouses, trackpads, trackpoints, keyboards, touchbars and touchscreens, while common output devices include monitors, speakers, and printers. These devices allow the user to input data and commands into the device and receive output from the device. Various other components may be included in a computer device, such as graphics processing units, network interface cards, and storage devices like hard drives and solid-state drives. These components help to expand the capabilities of the device and allow it to perform more complex tasks. In summary, a computer device is an electronic device that is specifically designed to execute various computing tasks. It comprises components that are necessary for its operation.

Throughout the present disclosure, the terms "display means" and "display" are used as synonyms. The terms include any means for presenting visual content to a user. This may include a broad range of technologies and formats, including electronic display screens, projection systems, projection surfaces, holographic systems, Augmented Reality devices, Virtual Reality devices, and/or the like.

Electronic display screens are perhaps the most common type of display means in use nowadays. These can include LCD, LED, OLED, Retina, E-Ink and other types of displays, which are used in devices ranging from laptops, smartphones and smartwatches to televisions and large format displays. These screens typically rely on backlighting or other forms of illumination to produce an image and may be capable to offer a wide range of color and resolution capabilities.

Projection systems are another type of display means, which use light to project an image onto a projection surface such as a screen or wall. These can include traditional projectors, as well as newer technologies such as laser projection and digital light processing (DLP). Projection systems are often used in settings such as movie theaters, conference rooms, and large spaces. Projection surfaces may come in various shapes, sizes, and materials, and can be used for a wide range of applications. The most common type of projection surface is a plain, preferably white, wall. It is a simple and inexpensive way to project images, videos, and presentations. Another type of projection surface is a projector screen. Projector screens are designed specifically for projection purposes. They come in various sizes and materials, such as vinyl, fabric, and glass beads. They are often used for applications where a particularly high quality of a projection is desired. Another type of projection surface is a transparent projection surface. Transparent projection surfaces are made of glass or acrylic and are often used for advertising or digital signage. They are common for storefront displays, museums and galleries where a user can see both the projection and an exhibit behind it.

Holographic display means are a type of display means which uses complex optics to produce three-dimensional images that appear to float in space. They may be used for a range of applications, including product visualization, scientific visualization, and entertainment.

Augmented Reality devices and Virtual Reality devices may comprise display means different to each other to create their respective immersive experiences. Augmented Reality devices typically use a transparent display means such as a head-mounted display (HMD) or a smart glass. These display means allow the user to see the real world while overlaying virtual objects on top of it. The virtual objects can be projected onto the transparent display means using various techniques such as beam-splitting, waveguide optics, or holographic displays. The virtual objects are then aligned with the real-world environment in real-time, creating the illusion that the virtual objects are a part of the real world. On the other hand, Virtual Reality devices typically use opaque displays such as a head-mounted display or a projection system. A Virtual Reality device, in particular the display means of a Virtual Reality device, may block out the real world and immerse the user in a virtual environment. The most common type of display means used in Virtual Reality devices is a high-resolution LCD or OLED screen.

Throughout the present disclosure, the term "touchless gesture input system" may refer to a hardware and software combination that enables the computer device to recognize and interpret physical gestures carried out by a user without direct touch. This system may include, for example, cameras, infrared sensors, and other types of motion detection sensors that are capable of detecting the movement of a user's body parts in free space.

Throughout the present disclosure, the term "touchless gesture input mode" may refer to an operational state of the computer device wherein control commands are generated based on the recognition of touchless gestures performed by a user, in particular free-space movements of the user's finger detected by the touchless gesture input system.

For that, the touchless gesture input system preferably includes or consists of sensor means. The sensor means may include one or more sensor devices. Groups of the one or more sensor devices may build a sensor array. An exemplary sensor means may comprise at least two sensor arrays, each sensor array including at least two sensor devices. The sensor devices may be devices capable of capturing sensor data, e.g., imaging data, but may also refer to supporting devices which support other sensor devices in enhancing the precision of capturing sensor data, e.g., an infrared projector. For example, one sensor array may include two infrared cameras and one infrared laser projector, thus the sensor array comprising three sensor devices in total.

The sensor means may in particular be 3D imaging sensor means which include sensor devices that are, alone or in combination with other sensor devices, capable of capturing three-dimensional images of an environment, in particular of objects such as a user's hand. There are several different types of 3D imaging sensor means, including time-of-flight (TOF) sensors, structured light sensors, and stereo vision sensors. TOF sensors work by emitting a light pulse and measuring the time it takes for the light to bounce back from an object, enabling them to create a three-dimensional map of the object's shape and distance. One example for said TOF sensors is a LiDAR sensor. Structured light sensors use a pattern of light and shadow, e.g., a projected pattern projected by a laser projector, and at least one camera to create a three-dimensional map of an object. Stereo vision sensors use at least two cameras to create a three-dimensional image by comparing the images captured by each camera. The cameras may for example be infrared cameras. The projector may for example be an infrared laser projector. Preferably, a projector is configured to emit light having a wavelength which is outside the human visible areas of wavelengths, thus not disturbing the user. Using a projector projecting a pattern generally increases the accuracy of captured sensor data.

The touchless gesture input system may be configured to observe an interaction space comprising or being a 3D space in the nearfield of the computer device in which the user may provide touchless user input, i.e., free-space finger movement. The space may be a space between the user and the computer device, e.g., when the user faces a display means of the computer device, the space being located between the user's face and the display means. Generally, the interaction space may be within or equal to the field of view of the sensor means. The interaction space may have a spatial orientation and/or location that is particularly convenient for the user person for providing touchless user input, i.e., free-space finger movements. It may be provided that the user is provided with a control option to adjust the spatial orientation and/or location of the interaction space. The interaction space may be arranged a least partially above the keyboard and/or the touch-sensitive control surface. In case if the computer device is a laptop computer, the interaction space may be arranged essentially above the base portion of the laptop computer.

The touchless gesture input system may receive, in particular from sensor means, sensor data, i.e., data collected by sensor means. The sensor means may preferably include at least one imaging sensor device, as mentioned above, thus in this case, the sensor data includes image data. In a preferred embodiment, the sensor means is configured to capture a 3D image of the interaction space. The 3D image may be generated based on layering various sensor data from different sensor devices. In particular, the sensor means may include a depth sensor, such as at least one infrared sensor, facilitating creation of the 3D image. Said captured sensor data may be processed by the computer device, in particular by a processing unit of the computer device, in order to generate control commands corresponding to the user input lying in the sensor data.

Throughout the present disclosure, the term "touch-sensitive control surface" may refer to a surface on or associated with the computer device at least partially being capable of detecting user touch inputs. This may include touchpads, touchscreens, trackpads, or any surface designed to respond to physical contact by a user's fingers or other objects. A touchpad may be a physical touchpad or a virtual touchpad. An example for a virtual touchpad is a touchpad displayed on a secondary touch display, e.g., arranged at a base portion of a laptop computer. The secondary touch display, in contrast to the display means, may display control elements for controlling the computer device. In particular, the conrol elements may change or appear upon determining presence of a gesture mode activation trigger or upon switching from the touch mode to a touchless gesture input mode. The control elements may include control elements like keyboard elements or computer mouse elements, such as right click, scroll, left click elements. The control elements may be displayed such as it is ergonomic for a user touching the control elements with a second hand which is not the hand which performs the free-space finger movement. For example, the control elements may be arranged in a curved manner. It may be provided that, in the touchless gesture input mode, the user's left hand presses and holds a scroll control elements on the secondary touch display while performing a free-space finger movement with the user's right hand moving the index finger up and down which causes scrolling up or down or zooming in or out. For example, the user may move, in the touchless gesture input mode, the finger performing the free-space finger movement, to point on a specific control element displayed by the display means and at the same time, using the user's left hand, touching a left click control element on the second touch display causing performing a left click on the control element displayed on the display means.

Throughout the present disclosure, the expression "touch input mode" should be understood as a mode of operation where user interactions with the touch-sensitive control surface are translated into control commands by the computer system, typically for manipulating on-screen content. Accordingly, the term "touch input" may refer to the physical contact made by a user's finger or other conductive object with a touch-sensitive control surface, which is normally interpreted by the computer device to generate control commands.

Throughout the present disclosure, the expression "gesture mode activation trigger" may include any action or pattern of touch recognized by the computer device as an instruction to switch input modes. As such, this trigger might consist of specific touch patterns such as a simultaneous multi-finger or palm touch.

The technical advantages of the aforementioned features include improved control and versatility in user interactions with the computer device. It may allow users to seamlessly switch between touch input for finer control and gesture input for a more holistic and ergonomic interaction. This method may also reduce the effort required to perform complex commands, increasing efficiency and productivity. It may enhance accessibility for users with disabilities by offering an alternative mode of interaction. Additionally, this method may prevent inadvertent inputs by requiring specific gestures to switch modes, improving system reliability. Lastly, it may modernize the user interface experience, adapting to the evolving expectations of users who seek more fluid and dynamic interaction with their devices.

It may be provided that the method includes remaining in the touchless gesture input mode during a period of time in which the gesture mode activation trigger is maintained, in particular in which the touch input on the touch-sensitive control surface comprises two or more touchpoints.

Throughout the present disclosure, the term "period of time" should be understood as a specified duration during which the computer device maintains a certain operational state or mode. The duration may be predetermined, configurable by the user, or dynamically adjusted based on user interaction patterns and application requirements.

The technical advantages of including the feature of remaining in the touchless gesture input mode for a maintained gesture mode activation trigger may cater to scenarios requiring sustained touchless interaction. It may allow a user to engage in prolonged gesture-based inputs without interruption, enhancing the usability of touchless input for certain tasks or applications. This feature may thus reduce the likelihood of accidental exits from the touchless gesture input mode.

It may be provided that the method includes switching back from the touchless gesture input mode to the touch input mode upon determining that the gesture mode activation trigger has stopped, in particular a user removing fingers in a manner that the gesture mode activation trigger is not maintained.

It may be provided that the method includes seamlessly, during the usage of the computer device, deciding between the touch input mode and the touchless gesture input mode based on detecting the occurrence of the gesture mode activation trigger and switching accordingly from the touch input mode to the gesture input mode and vice versa.

Throughout the present disclosure, the term "switching back" may refer to the action of reverting to a previous operational state or mode after a change has occurred. In the context of the present invention, it involves returning to the touch input mode from the touchless gesture input mode.

The term "gesture mode activation trigger has stopped" should be understood as the termination of the specific touch or gesture that initiated the touchless gesture input mode. Such termination may be performed when it is deemed that the user has completed their touchless interaction and is an indication to the system to transition back to allowing touch input to generate control commands.

Throughout the present disclosure, the term "seamlessly" should be understood as making a transition between modes that is smooth and without interruption, providing a continuous user experience without noticeable delays or actions required by the user to effect the change. Thus, "seamlessly" may include "continuously".

The expression "during usage of the computer device" may include any period when the computer device is operating and capable of receiving and processing user inputs, whether actively being interacted with by the user or ready to do so.

This provides advantageously a seamless and fluid transition for the user between touchless gestures and touch inputs without requiring complicated user actions. It thus enables a more natural interaction flow. Moreover, it may increase the efficiency of the overall system by minimizing the time spent on switching between modes, potentially preventing disruption in the user's workflow. This capability may also aid in the conservation of computational resources by enabling inactive computer hardware resources halt processing.

It may be provided that, in the touchless gesture input mode, a volume is determined enclosing at least part of the user's finger performing free-space finger movement, preferably the fingertip of the finger. Any object outside the volume may be disregarded by the touchless gesture input system in order to not disturb the free-space finger movement, in particular in order to avoid confusion of input objects. The volume can have cubic, rectangular, polygonal, spherical, cylindrical, conical, or other geometric shapes. The volume may have a semi-open geometric shape.

It may be provided that, in the touchless gesture input mode, based on touch input no control commands are generated for manipulating content displayed on the display means. In other words, in touchless gesture input mode, no control commands are generated through touch input.

It may be provided that, in the touch input mode, based on free-space finger movement no control commands are generated for manipulating content displayed on the display means.

In other words, in touch input mode, no control commands are generated through free-space finger movement.

The term "control commands" should be understood as instructions that the computer device processes to effect a change in the content displayed on the screen, such as moving a cursor, opening a file, scrolling a page, or executing an application function.

The expression "based on touch input" may include any recognition of touch detected by the touch-sensitive control surface that usually would lead to an action or response by the computer device.

Throughout the present disclosure, the term "free-space finger movement" may refer to the gestures or motions made by a user's fingers in the air, without any physical contact with the touch-sensitive control surface or any other part of the computer device.

Not generating control commands based on touch input while in touchless gesture input mode may prevent unintentional inputs that could disrupt the user's interaction with the computer device. It may allow a clear distinction between the command sets associated with each input mode, thereby reducing the risk of command conflict or ambiguity. This feature may also improve the accuracy of touchless gesture controls by ensuring that gestures are not inadvertently interpreted as touch inputs. It thus can minimize the likelihood of erroneous inputs during touchless interactions, enhancing the system's overall reliability and user trust. On the other hand, not generating control commands for free-space finger movements while in the touch input mode may include an increase in the accuracy and precision of touch-based inputs by avoiding unintentional recognition of non-touch gestures. It may prevent inadvertent gestures from affecting the content display, thereby allowing the user to focus on touch interactions without interference from unrelated movements. It may thereby enhance the robustness of touch input mode by isolating it from unintentional disturbances in the surrounding environment.

It may be provided that the touch-sensitive surface is a trackpad, preferably an integrated trackpad of the computer device being a portable computer, such as a laptop computer.

Throughout the present disclosure, the term "integrated trackpad" may include a trackpad that is built into the main body of a computer device, allowing for a sleek design and uninterrupted surface for input. For example, an integrated trackpad may be built into the base portion of a laptop computer.

The touch-sensitive surface being a trackpad, especially an integrated trackpad of a portable computer like a laptop computer, may advantageously be a familiar and convenient method for input that is well-known by users.

It may be provided that the user is provided with a setting option to set or adjust the gesture mode activation trigger and/or to set or adjust an overlap time upon switching from the touch input mode to the touchless gesture input mode and/or from the touchless gesture input mode to the touch input mode. It may be further provided that during the overlap time, both the touch and the touchless gesture input modes are activated. Additionally, it may be provided that, in particular during the overlap time, control commands are generated upon occurrence of both touch input and free-space finger movement.

Throughout the present disclosure, the term "setting option" may refer to a configuration choice available to the user to customize aspects of the method based on their individual preferences or requirements. This could take the form of user interface elements within software, such as sliders, switches, checkboxes, or any interactive element that allows users to make adjustments to the system's behavior.

Throughout the present disclosure, the term "overlap time" may include a transitional period during which both input modes (touch input mode and touchless gesture input mode) are concurrently active. This allows for a smooth transition without an abrupt change in user interaction capability.

Providing setting options to adjust the gesture mode activation trigger and/or the overlap time may deliver a more customizable and user-friendly interface that can adapt to various use cases and user preferences. It may allow users to tailor the sensitivity and responsiveness of mode switching to match their interaction style, potentially mitigating false activations or unintended switches. Enabling adjustments for overlap time may increase the fluidity of interactions as users transition between input methods, reducing potential disruptions during critical tasks. The generation of control commands during overlap time can provide continuity of input that benefits users who perform complex or simultaneous gestures that could span across touch and touchless modalities. Moreover, the configurability may enhance user satisfaction by allowing personalization of the device to suit the user's habits and preferences.

It may be provided that the user is provided with a setting option to set or adjust a first latency period, wherein switching from the touch input mode to the touchless gesture input mode is only performed if the gesture mode activation trigger is detected for at least a time period exceeding the first latency period. Alternatively or additionally, it may be provided that the user has the option to set or adjust a second latency period, wherein switching from the touchless gesture input mode to the touch input mode is only performed if it is detected that the gesture mode activation trigger has stopped for at least a time period exceeding the second latency period.

The term "first latency period" should be understood as a designated duration that must be met or exceeded when the gesture mode activation trigger is recognized in order to initiate the switch from touch input mode to touchless gesture input mode. This latency period prevents immediate mode switching upon casual or accidental gestures.

The term "second latency period" may refer to a designated duration that must be met or exceeded after the gesture mode activation trigger has stopped before the system reverts from the touchless gesture input mode to the touch input mode. This period helps ensure that the user has intentionally concluded their gesture-based interactions.

Providing setting options to adjust the first and second latency periods include offering users the ability to fine-tune the responsiveness of the mode-switching mechanism to their personal interaction speed, potentially leading to a more tailored and satisfying user experience. Adjusting the first latency period may minimize the likelihood of unintentional mode changes, ensuring that the system only shifts to touchless gesture input mode as a result of a convincing, deliberate gesture. The option to set the second latency period may similarly provide a buffer against inadvertent mode transitions back to touch input, allowing the user a grace period before concluding touchless interactions.

It may be provided that the method further comprises, in the touch input mode, causing the touchless gesture input system to transition into a power mode below a normal operation mode, such as an idle mode, a sleep mode, or an off mode.

Throughout the present disclosure, the term "power mode" may refer to an operating state of the touchless gesture input system that vary in terms of power consumption and functionality.

The term "normal operation mode" should be understood as the state in which the touchless gesture input system is fully operational and actively scanning for gesture inputs with all the associated hardware components powered on for immediate response.

The expressions "idle mode," "sleep mode," and "off mode" may include various levels of reduced activity or power states that the touchless gesture input system can enter. "Idle mode" usually implies low power consumption while still being able to quickly become active again. "Sleep mode" may denote an even lower power state that requires a more substantial event or user action to reactivate the system. "Off mode" commonly refers to the state where the touchless gesture input system is completely powered down and not responsive to gesture inputs until it is explicitly reactivated.

The capability of transitioning the touchless gesture input system into a lower power mode during touch input mode advantageously helps by conserving energy, which may be particularly beneficial for battery-powered devices such as laptops computers or tablets. This approach may also extend the overall lifetime of the system components by reducing the time they spend in active operation. It can potentially decrease the heat generated by the device, offering a more comfortable user experience and preventing heat-related damage or throttling. Furthermore, it may minimize system resource usage when gesture input is not needed, freeing those resources for other tasks and improving device performance.

It may be provided that the method further comprises, in the touchless gesture input mode, providing a user-perceptible signal indicating that the touchless gesture input mode is activated, in particular including at least one illumination signal. It may be provided that the user-perceptible signal is customizable by the user.

Throughout the present disclosure, the term "user-perceptible signal" may refer to any form of indication perceptible to the user, such as visual, auditory, or tactile signals that communicate the current state or changes of state within the computer device.

The expression "illumination signal" may include any light-based form of indication, such as LED lights, screen messages, or illuminated icons that can effectively convey the activation of gesture mode to the user.

By providing a user-perceptible signal, particularly an illumination signal, when the touchless gesture input mode is activated, the user gets a clear and immediate information of the current input mode, reducing the potential for user confusion.

It may be provided that the method of controlling a computer device includes manipulating content displayed on the display means by moving a pointer in accordance with the touch input and/or free-space finger movement of the user. It may be further provided that, optionally, the method comprises generating a click command in response to a user action which is independent of touch input and/or free-space finger movement used for manipulating content displayed on the display means. It may be provided that, optionally, the user action comprises using at least one input element arranged on and/or near the computer device, in particular the touch-sensitive surface.

Throughout the present disclosure, the term "manipulating content" may refer to the capability of changing or controlling information or graphical elements displayed on a computer's display means. This can include common interactions such as selecting, dragging, dropping, scrolling, and other actions typically associated with a graphical user interface.

The term "pointer" or "mouse pointer" should be understood as a cursor or graphical indicator displayed on-screen that facilitates precise selection and interaction with digital elements. Its position typically corresponds to the location where a user's input command, such as a click or selection, will occur.

The term "click command" should be understood as a command commonly associated with the act of pressing and releasing a button, mouse button or similar input element, frequently used to select items, activate options, or interact with objects within the user interface.

The expression "input element" may include any hardware component or area designated for receiving user input, such as buttons, keys, touchpads, or specialized sensors.

It is thereby facilitated a coherent and familiar interaction paradigm for users by translating both touch and free-space movements into pointer manipulation, contributing to an intuitively navigable interface.

According to a second aspect of the present invention, a data processing apparatus may be provided, preferably an electronic device, more preferably a computer device, comprising means for carrying out the method according to the first aspect of the present invention.

Throughout the present disclosure, "means for carrying out the method" may be understood as the hardware components, software, or a combination of both, that are capable of performing the method according to the first aspect of the present invention. These means could be intrinsic to the computer device or could be additional modules or peripherals that are connected to it.

According to a third aspect of the present invention, it may be provided a system comprising a computer device configured to receive and process sensor data; a display means, preferably being part of the computer device or being communicatively coupled to the computer device. The system may further include a touch-sensitive control surface, preferably being a surface of a trackpad associated with the computer device, and a touchless gesture input system, particularly sensor means, preferably including at least one sensor device. The touchless gesture input system is configured for observing an interaction space arranged at least partially above the touch-sensitive control surface. Moreover, it may be provided that the computer device is configured for performing the method according to the first aspect of the present invention. Optionally, the computer device may comprise a processor and a non-transitory memory. Optionally, the computer device may include a folding mechanism and also may comprise a housing having integrated therein the touchless gesture input system and/or the touch-sensitive surface. Additionally, it may be provided that the touchless gesture input system comprises at least two sensor devices, the at least two sensor devices being cameras of the same type, preferably two 2D-cameras, more preferably two infrared cameras, having an overlapping field of view and preferably being arranged spaced apart from each other. At least one, preferably each, of the sensor devices may be oriented to have a field of view being oriented essentially towards a bottom part of a display means of the computer device. Optionally, the computer device may comprise and/or be communicatively coupled to an infrared laser projector configured to project an infrared laser pattern which is capturable by an infrared camera.

The term "folding mechanism" may refer to the physical design feature that allows part of the computer device, such as a screen or keyboard, to fold relative to another part, aiding in portability and versatility.

The term "housing" should be understood as the structural enclosure that contains and protects the internal components of the computer device, including the various input systems.

According to a fourth aspect of the present invention, it may be provided a computer program or a computer-readable medium having stored thereon a computer program. The computer program comprises instructions which, when the program is executed by a computer, preferably by a data processing apparatus according to the second aspect of the present invention or by a system according to the third aspect of the present invention, cause the computer to carry out the method according to the first aspect of the present invention.

All features, technical implementation details and advantages described with respect to any one of the aspects of the present invention described herein are self-evidently mutatis mutandis applicable for any one of the other aspects of the present invention and vice versa.

### BRIEF DESCRIPTION OF THE DRAWINGS

The disclosure may be better understood by reference to the following drawings:
- Figure 1:: A perspective view of a computer device in accordance with embodiments of the present disclosure.
- Figure 2: An exemplary hardware configuration of a sensing means of a touchless gesture input system according to embodiments of the present disclosure.
- Figure 3: A three-dimensional interaction space in accordance with embodiments of the present disclosure.
- Figure 4: An example configuration of a computer device in accordance with embodiments of the present disclosure.
- Figure 5: An example use of a computer device for browsing content in accordance with embodiments of the present disclosure.
- Figure 6: A photo of a prototype of a computer device in accordance with embodiments of the present disclosure.
- Figure 7: A photo of a prototype of a computer device being in a touch input mode in accordance with embodiments of the present disclosure.
- Figure 8: A photo of a prototype of a computer device being in a touchless gesture input mode in accordance with embodiments of the present disclosure.
- Figure 9: A photo of a prototype of a computer device being switched back from a touchless gesture input mode into a touch input mode in accordance with embodiments of the present disclosure.
- Figure 10: A photo of a prototype of a computer device being operated in the touchless gesture input mode in accordance with embodiments of the present disclosure.

### DETAILED DESCRIPTION

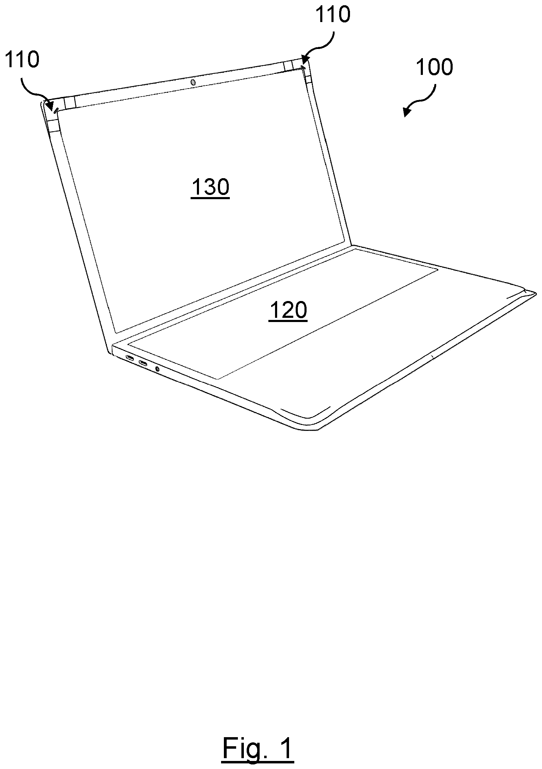

Fig. 1 illustrates a perspective view of a computer device 100 in accordance with embodiments of the present disclosure. The computer device 100 comprises a base portion and a top portion. The computer device 100 is open, thereby revealing respective user-facing surfaces of the base portion and top portion. A display means 130 is arranged on the user-facing surface of the top portion. A touch-sensitive control surface 120 is arranged on the user-facing surface of the base portion. The computer device 100 comprises a touchless gesture input system 110, which comprises in the illustrated embodiment sensor means which are arranged at or near opposing upper corners of the top portion. However, the touchless gesture input system 110 may comprise other sensor arrangements.

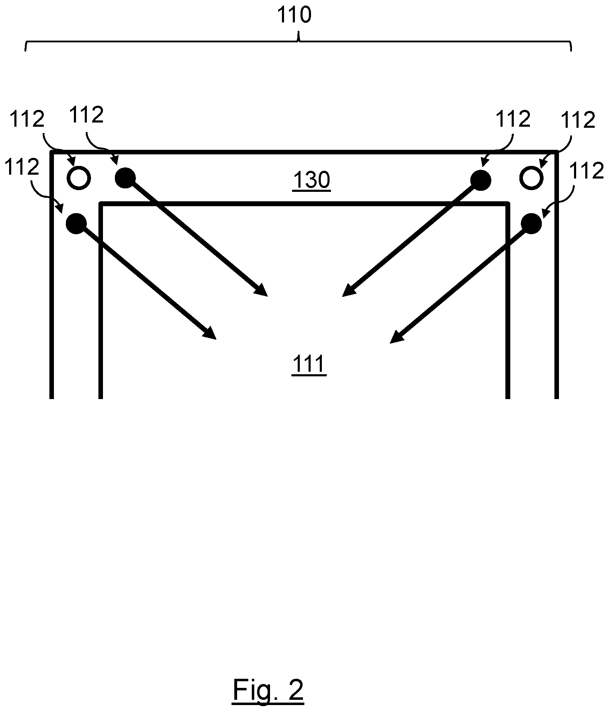

Figure 2 illustrates an exemplary hardware configuration of a touchless gesture input system 110 including sensor means according to an embodiment of the present disclosure. The sensor means 112 comprise two sensor arrangements or arrays, each being arranged in an upper corner of the top portion of the computer device 100, i.e., where the display means 130 is located. Each sensor array comprises a viewing direction which is depicted by arrows. As can be seen from the pointing direction of the arrows, the fields of view of the sensor arrays extend at least partly across the display means 130 from a left side to a right side and/or vice versa with respect to an orientation of the display means 130 during usage.

In the illustrated embodiment, each sensor array comprises two sensor devices which may be infrared cameras and/or RGB-cameras and one projector which may be an infrared laser projector. The projector may project a pattern being capturable by the sensor devices and configured to support the sensor devices to capture sensor data, in particular depth information. In the illustrated embodiment, the projectors are respectively arranged in upper corners of the top portion of the computer device 100, in particular at a framing of the top portion. Accordingly, the sensor devices are respectively arranged essentially in said upper corners.

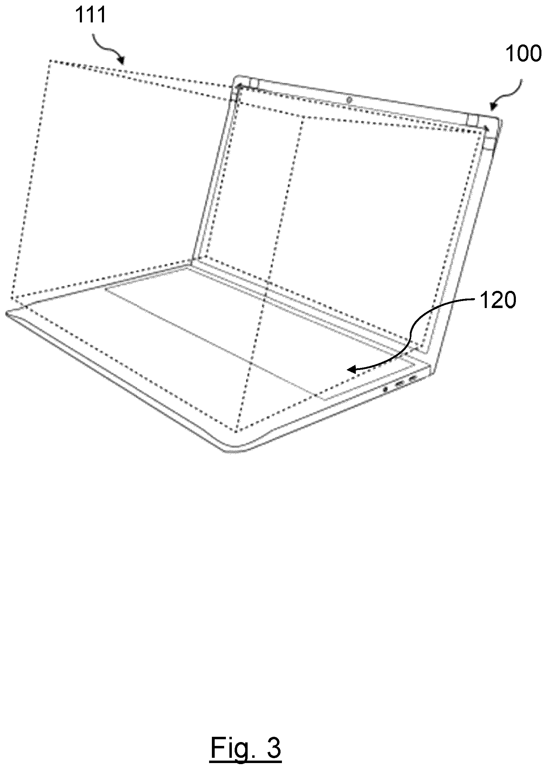

Fig. 3 illustrates a three-dimensional interaction space 111 in accordance with embodiments of the present disclosure as one example of an interaction space observed by the touchless gesture input system 110. It should be understood that the interaction space 111 is represented in Fig. 3 by a geometric body with a cube-like shape for illustration purposes, but that the interaction space 111 does not have to have the exact shape shown, and neither will it be a geometric body with sharp edges in reality. The interaction space may have different shapes, dimensions, directions and/or spatial extensions depending on the use case and/or hardware characteristics.

For example, the interaction space may be arranged essentially above the user-facing surface of the base portion of the computer device 100, or a part thereof, or may instead or in addition cover other areas, such as without limitation proximal to the computer device (i.e., between the computer device 100 and the user 200) and/or next to one or two sides of the computer device 100. By using touchless gesture control, the portable computer 100 can react in the most intuitive way to free-space finger movements performed by users 200. The touch-sensitive control surface 120 may be used as a touchpad, in particular for manipulating a position of a pointer displayed by the display means 130. The applications are practically endless, including for example and without limitation touchless gesture control with free-hand gestures, touchless gesture control with free-hand gestures including subsequently switching to touch inputs, e.g., on the touch-sensitive control surface 120. The user 200 may define one or more user-defined touchless input gestures.

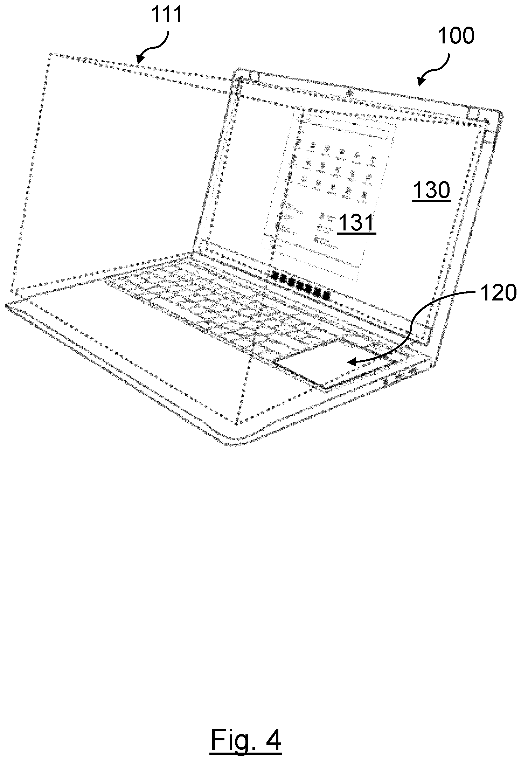

Fig. 4 illustrates an example use of the computer device 100 according to an embodiment of the present disclosure with a user-customized touchscreen layout of the touch-sensitive control surface 120. The display means 130 of the computer device 100 displays a graphical user interface of an operating system, i.e., content 131, but it should be understood that any application could be displayed. The touch-sensitive control surface 120 of the computer device 100 displays a user-customized touchscreen layout including a keyboard and a touchpad.

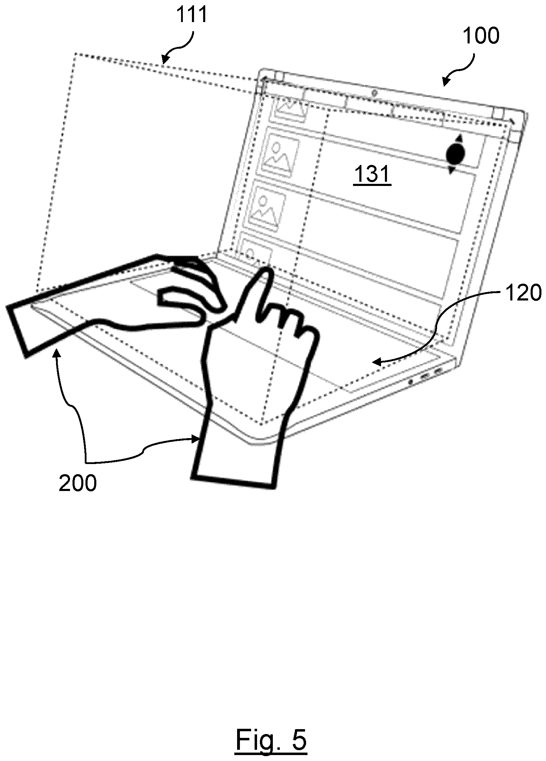

Fig. 5 illustrates an example use of the computer device 100 according to an embodiment of the present disclosure for manipulating content 131. The display means 130 of the computer device 100 displays a browser window with a website of a video platform, as one example of Internet content. The touch-sensitive control surface 120 of the computer device 100 displays a virtual computer keyboard and a touchpad. The user can conveniently control the pointer or directly scroll through the displayed contents using the touchpad of the touch-sensitive control surface 120. According to the needs of the user 200, the user 200 may thus perform, in a touch input mode, touch input on the touch-sensitive control surface. The computer device 100 may, based on this, generate at least one control command configured to manipulate content 131 displayed on the display means 130 associated with the computer device 100. If the user 200 intends to provide touchless input, i.e., free-space finger movement, the user 200 may provide the gesture mode activation trigger which may be, in particular, touch input on the touch-sensitive control surface 120 comprising two or more touchpoints 121. The computer device 100, using the touch-sensitive control surface 120, may determine presence of said gesture mode activation trigger. In response to the determining, the computer device 100 may switch from the touch mode to the touchless gesture input mode. In the touchless gesture input mode, the computer device 100 may generate at least one control command configured to manipulate content 131 displayed on the display means 130 based on a free-space finger movement determined by the touchless gesture input system 110.

In embodiments of the present disclosure, the computer device 100 may be configured to remain in the touchless gesture input mode during a period of time in which the gesture mode activation trigger is maintained, in particular in which the touch input on the touch-sensitive control surface 120 comprises two or more touchpoints 121. The computer device 100 may, in particular, seamlessly, during usage of the computer device, decide between the touch input mode and the touchless gesture input mode based on detecting the occurrence of the gesture mode activation trigger and switching accordingly from the touch input mode to the touchless gesture input mode and vice versa. The user 200 may be provided with a setting option to set or adjust a first latency period, wherein switching from the touch input mode to the touchless gesture input mode is only performed if the gesture mode activation trigger is detected at least for a time period exceeding the first latency period. Alternatively or additionally, it may be provided that the user 200 can set or adjust a second latency period, wherein switching from the touchless gesture input mode to the touch input mode is only performed if it is detected that the gesture mode activation trigger has stopped at least for a time period exceeding the second latency period.

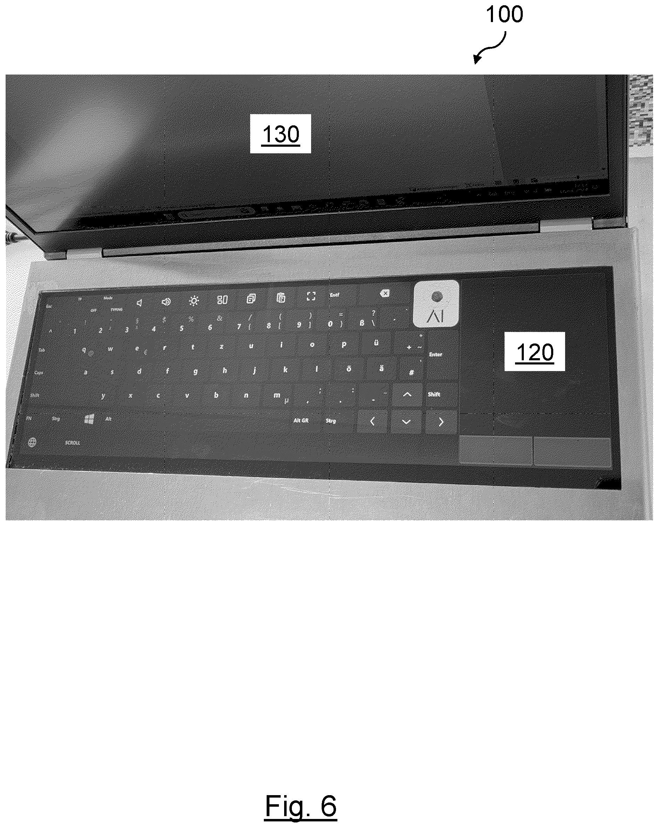

Figs. 6-9 are photos of a computer device 100 according to embodiments of the present disclosure. The display means 130 is arranged at the top portion of the computer device 100. The touch-sensitive control surface 120 including a touchpad at the right-hand side is arranged at a bottom portion of the computer device 100. In alternative arrangements, the touch-sensitive control surface 120 may be arranged at the left-hand side or in any other position that allows an ergonomic control of the computer device 100.

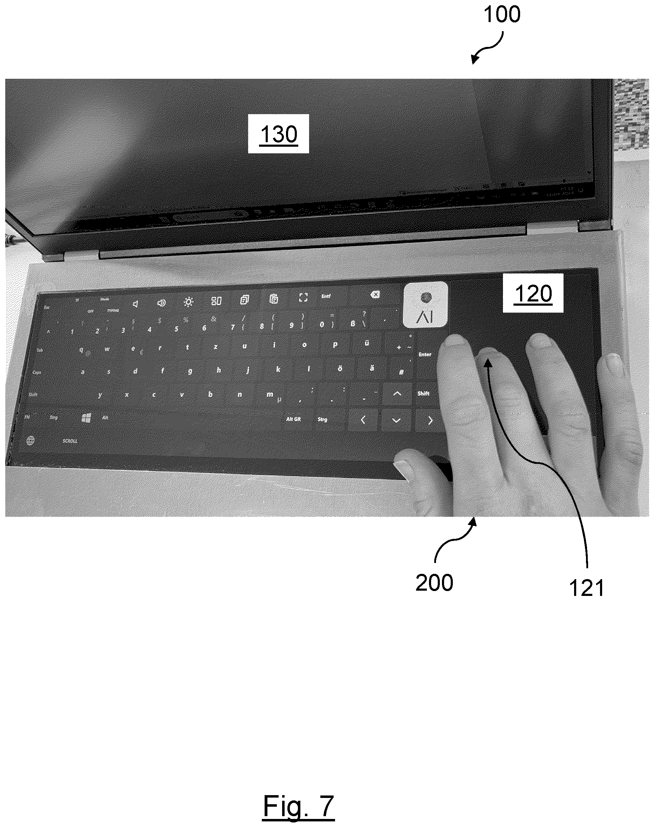

In fig. 6, no user 200, i.e., no user's hand is shown. In fig. 7, the user's hand touches the touchpad with one finger, i.e., one finger only, thereby providing one touchpoint 121. In this state, the touchless gesture input mode may be deactivated, and the touch input mode may be active such that the user can manipulate content 131 displayed on the display means 130 via touch input, e.g., manipulating the position of a pointer shown on the display means 130.

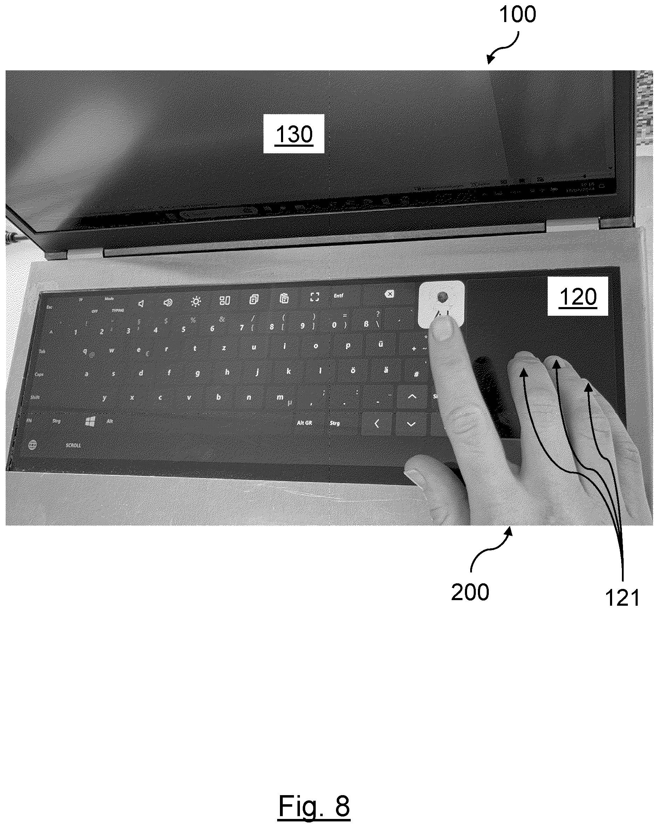

In fig. 8, the user's hand touches the touchpad with two or more fingers (in the illustrated embodiment with three fingers) thereby providing two or more touchpoints 121 (in the illustrated embodiment three touchpoints 121). In this state, the touchless gesture input mode may be active while the touch input mode being deactivated. Thus, in this mode, the user 200 can manipulate content 131 displayed on the display means 130 via touchless gesture input, i.e., free-space finger movement, e.g., manipulating the position of a pointer shown on the display means 130 and/or performing clicks by, e.g., moving the finger towards the display means 130. As sown in fig. 8, the index finger of the user 200, i.e., a finger which is currently not touching the touchpad, is used to perform free-space finger movement as touchless gesture input.

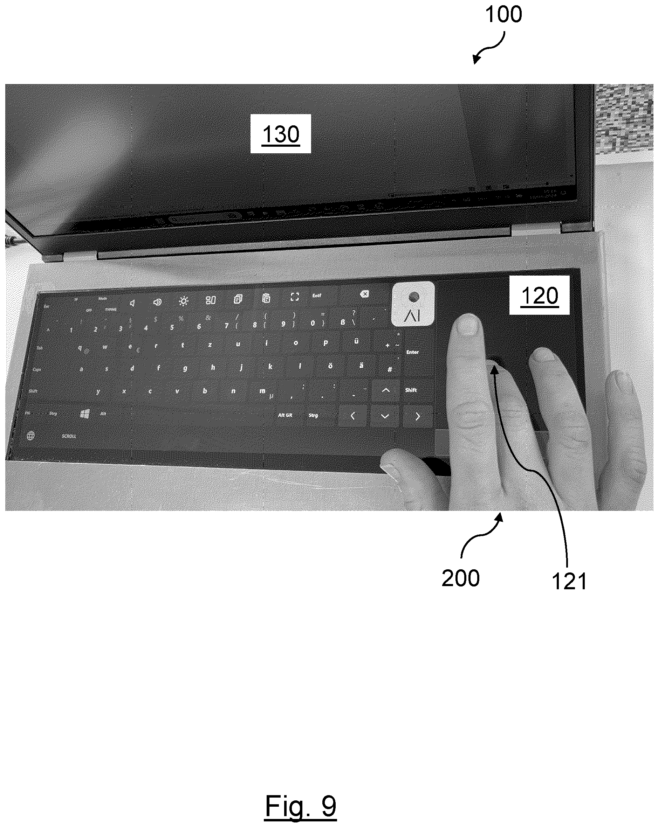

In fig. 9, a situation is shown where the user 200, based on a starting situation according to fig. 8, has removed two of the three fingers touching the touchpad. Thus, in fig. 9, only one finger remains on the touchpad. Thus, the gesture activation trigger has stopped and the computer device 100 therefore switches back from the touchless gesture input mode to the touch input mode. This underlines the seamless character of the present disclosure providing the user 200 with a high degree of intuitiveness in using the computer device.

In summary, certain embodiments of the invention provide for the detection of the fingers, in particular the number of fingers, present on the touch-sensitive control surface 120 as a trigger to switch between a touch input mode and a touchless gesture input mode. In certain embodiments, when no finger or one finger is touching the touch-sensitive control surface 120, the touch input mode is active, and when two or more fingers are touching the touch-sensitive control surface 120, the touchless gesture input mode is active.

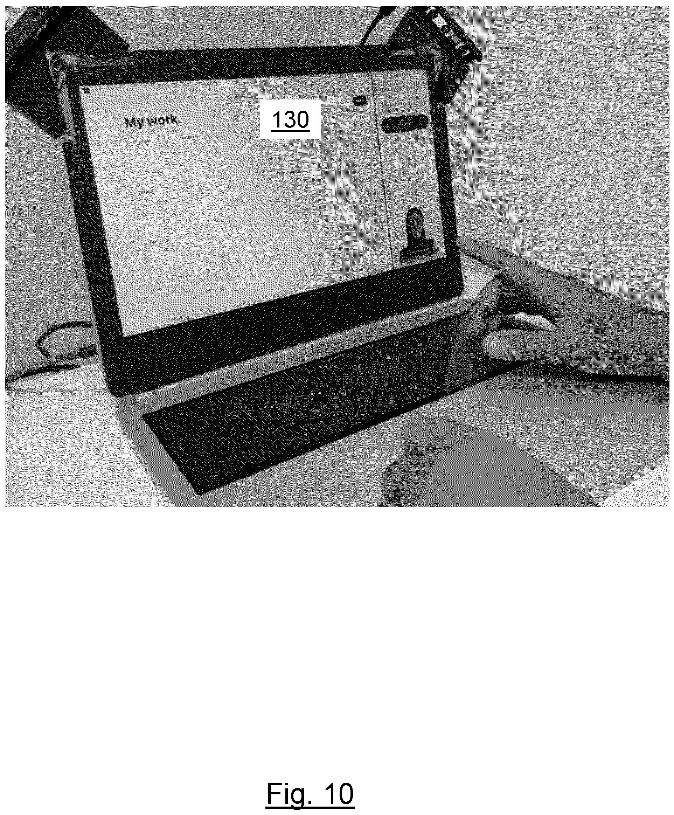

In fig. 10 a situation is shown where the user 200 performs the gesture activation trigger with the right hand by resting two fingers on the touch-sensitive control surface 120 thus the system being in the touchless gesture input mode. In the base portion of the shown laptop computer, the touch-sensitive control surface 120 is shown as an integrated portion of a second touch display. On the left hand side of said second touch display, control elements are shown in a curved manner. The user 200 may, using the left hand, ergonomically click or press and hold one or more of the control elements, e.g., "left click", "scroll", "right click", and/or the like and thereby causing the laptop computer to behave accordingly.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 100: computer device
- 110: touchless gesture input system
- 111: interaction space
- 112: sensor means
- 120: touch-sensitive control surface
- 121: touchpoint
- 130: display means
- 131: content
- 200: user

## Claims

1. A computer-implemented method for controlling a computer device (100) comprising a touchless gesture input system (110) and a touch-sensitive control surface (120), the method comprising:
in a touch input mode, generating at least one control command configured to manipulate content (131) displayed on a display means (130) associated with the computer device (100) based on touch input on the touch-sensitive control surface (120);
determining presence of a gesture mode activation trigger, the gesture mode activation trigger including a touch input on the touch-sensitive control surface (120) comprising two or more touchpoints (121);
in response to the determining, switching from the touch mode to a touchless gesture input mode; and
in the touchless gesture input mode, generating at least one control command configured to manipulate content (131) displayed on the display means (130) based on a free-space finger movement determined by the touchless gesture input system (110).

2. The computer-implemented method of claim 1, further comprising:
remaining in the touchless gesture input mode during a period of time in which the gesture mode activation trigger is maintained, in particular in which the touch input on the touch-sensitive control surface (120) comprises two or more touchpoints (121).

3. The computer-implemented method of any one of the preceding claims, further comprising:
switching back from the touchless gesture input mode to the touch input mode upon determining that the gesture mode activation trigger has stopped, in particular a user (200) removing fingers in a manner that the gesture mode activation trigger is not maintained.

4. The computer-implemented method of any one of the preceding claims, further comprising:
seamlessly, during usage of the computer device (100), deciding between the touch input mode and the touchless gesture input mode based on detecting the occurrence of the gesture mode activation trigger and switching accordingly from the touch input mode to the touchless gesture input mode and vice versa.

5. The computer-implemented method of any one of the preceding claims, wherein in the touchless gesture input mode, based on touch input no control commands are generated for manipulating content (131) displayed on the display means (130).

6. The computer-implemented method of any one of the preceding claims, wherein in the touch input mode, based on free-space finger movement no control commands are generated for manipulating content (131) displayed on the display means (130).

7. The computer-implemented method of any one of the preceding claims, wherein the touch-sensitive control surface (120) is a trackpad, preferably an integrated trackpad of the computer device (100) being a portable computer, such as a laptop computer.

8. The computer-implemented method of any one of the preceding claims, wherein a user (200) is provided with a setting option to set or adjust the gesture mode activation trigger; and/or to set or adjust an overlap time upon switching from the touch input mode to the touchless gesture input mode and/or from the touchless gesture input mode to the touch input mode, wherein in the overlap time both the touch and the touchless gesture input modes are activated, wherein in particular in the overlap time control commands are generated upon occurrence of both touch input and free-space finger movement.

9. The computer-implemented method of any one of the preceding claims, wherein a user (200) is provided with a setting option
to set or adjust a first latency period, wherein switching from the touch input mode to the touchless gesture input mode is only performed if the gesture mode activation trigger is detected at least for a time period exceeding the first latency period; and/or
to set or adjust a second latency period, wherein switching from the touchless gesture input mode to the touch input mode is only performed if it is detected that the gesture mode activation trigger has stopped at least for a time period exceeding the second latency period.

10. The computer-implemented method of any one of the preceding claims, further comprising, in the touch input mode mode:
causing the touchless gesture input system (110) to transition into a power mode below a normal operation mode, such as an idle mode, a sleep mode or an off mode.

11. The computer-implemented method of any one of the preceding claims, wherein in the touchless gesture input mode, a volume is determined enclosing at least part of the user's finger performing free-space finger movement, preferably the fingertip of the finger, wherein an object outside the volume is disregarded by the touchless gesture input system (110) in order to not disturb the free-space finger movement, in particular in order to avoid confusion of input objects.

12. The method of any one of the preceding claims, wherein manipulating content (131) displayed on the display means (130) comprises moving a pointer in accordance with the touch input and/or free-space finger movement of the user (200);
wherein, optionally, the method further comprises generating a click command in response to a user action which is independent of touch input and/or free-space finger movement used for manipulating content (131) displayed on the display means (130);
wherein, optionally, the user action comprises using at least one input element arranged on and/or near the computer device (100), in particular the touch-sensitive control surface (120).

13. A data processing apparatus, preferably an electronic device, more preferably a computer device (100), comprising means for carrying out the method of any one of claims 1-12.

14. A system, comprising:
a computer device (100) configured to receive and process sensor data;
a display means (130), preferably being part of the computer device (100) or being communicatively coupled to the computer device (100);
a touch-sensitive control surface (120), preferably being a surface of a trackpad associated with the computer device (100);
a touchless gesture input system (110), in particular sensor means (112), preferably including at least one sensor device, wherein the touchless gesture input system (110) is configured for observing an interaction space (111) arranged at least partially above the touch-sensitive control surface (120), wherein the computer device (100) comprises and/or is communicatively coupled to the touchless gesture input system (110);
wherein the computer device (100) is configured for performing the method of any one of claims 1-12;
optionally wherein the computer device (100) comprises a processor and a non-transitory memory;
optionally wherein the computer device (100) comprises a folding mechanism;
optionally wherein the computer device (100) comprises a housing having integrated therein the touchless gesture input system (110) and/or the touch-sensitive control surface (120);
optionally wherein the touchless gesture input system (110) comprises at least two sensor devices, the at least two sensor devices being cameras of the same type, preferably two 2D-cameras, more preferably two infrared cameras, having an overlapping field of view and preferably being arranged spaced apart from each other, wherein at least one, preferably each, of the sensor devices is oriented to have a field of view being oriented essentially towards a bottom part of a display means (130) of the computer device (100);
optionally wherein the computer device (100) comprises and/or is communicatively coupled to an infrared laser projector configured to project an infrared laser pattern which is capturable by an infrared camera.

15. A computer program or a computer-readable medium having stored thereon a computer program, the computer program comprising instructions which, when the program is executed by a computer, preferably by a data processing apparatus according to claim 13 or by a system according to claim 14, cause the computer to carry out the method of any one of claims 1-12.
